# EUROPEAN PATENT APPLICATION

(11) **EP 2 966 579 A1**
(43) Date of publication of application: **13.01.2016**
(21) Application number: 15173392.0
(22) Date of filing: 23.06.2015
(51) Int. Cl.: G06F 17/30

(54) **VIRTUALIZED UPWARD SCROLLING**

(30) Priority: 11.07.2014 US 201414329733
(71) Applicant: Siemens Product Lifecycle Management Software Inc., Plano, TX 75024-6612 (US)
(72) Inventor: REICH, Robert, Batavia, OH Ohio 45103 (US); NIZAMI, Javeed, Plano, TX Texas 75024 (US); TERALA, Krishna Murthy Rao, Milford, OH Ohio 45150 (US)
(74) Representative: Isarpatent

(57) **Abstract**

Methods for data display and corresponding systems (100) and computer-readable mediums (126). A method includes sending (305), to a server system (140), a request for a target data (230). The target data is a data element in a large data structure (210). The method includes receiving (310), in response to the request and from the server system (140), a first subset (220) of the large data structure (210) that includes the target data (230), and displaying (315) the first subset (220) in a display window (150) of the client data processing system (100). The method includes receiving (320) a user input to display a second subset (240) of the large data structure (210). The second subset (240) is logically previous to the first subset (220) in the large data structure (210). The method includes ending (325) a request for the second subset (240) of the large data structure (210) and receiving (330), from the server system (140), the second subset (240) of the large data structure (210). The method includes displaying the second subset (240) in the display window (150).

## Description

### TECHNICAL FIELD

The present disclosure is directed, in general, to computer-aided design, visualization, and manufacturing systems, product lifecycle management ("PLM") systems, and similar systems, that manage data for products and other items (collectively, "Product Data Management" systems or PDM systems), and other data processing systems.

### BACKGROUND OF THE DISCLOSURE

Often, a system will access a large amount of unnecessary data to provide a user access to specific desired data. Improved systems are desirable to achieve better client performance.

### SUMMARY OF THE DISCLOSURE

Various disclosed embodiments include methods for data display and corresponding systems and computer-readable mediums. A method includes sending, to a server system, a request for a target data. The target data is a data element in a large data structure, and receiving, in response to the request and from the server system, a first subset of the large data structure that includes the target data, and displaying the first subset in a display window of the client data processing system. The method includes receiving a user input to display a second subset of the large data structure. The second subset is logically previous to the first subset in the large data structure. The method includes sending a request for the second subset of the large data structure and receiving, from the server system, the second subset of the large data structure; and displaying the second subset in the display window.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates an example of a large data structure that is maintained in a server system; and
Figure 3 illustrates a flowchart of a process in accordance with disclosed embodiments.

### DETAILED DESCRIPTION

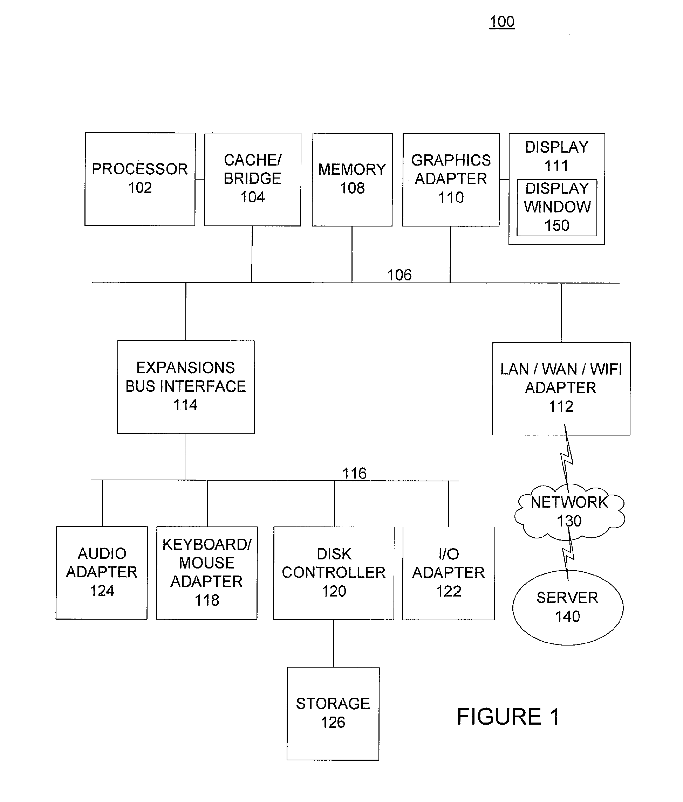

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Many systems can implement a "web client" model, where a client data processing system retrieves limited amounts of data from a server system when that data is needed, limiting the processing and storage requirements of the client. One of the fundamental issues with creating a good web client user experience is to provide exceptional performance to the user while working with large sets of data on the server. Some of this performance can be accomplished by providing a "window" or subset of the data to the user. In some cases, the client system can receive an initial window of data and provide controls to incrementally request an additional set of information in a manner that is largely transparent to the user of the client system. Disclosed embodiments provide a way to initially position that window and to move that window within the server-maintained data in more than one direction so that the client system can start with a very targeted view into a large data set and then navigate within the dataset efficiently and effectively.

Figure 1 illustrates a block diagram of a data processing system in which an embodiment can be implemented, for example as a client system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111, which displays the display window 150.

Other peripherals, such as local area network (LAN) / Wide Area Network / Wireless (*e.g*. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows 150 to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100. Note that a "server system" as used herein can be implemented in any second data processing system that exchanges data with a client data processing system as described herein. "Server system" and "client system" may be used in place of the longer phrases "server data processing system" and "client data processing system" respectively.

As discussed above, web client access models can allow thin-client access to large data stored on server systems. Some systems can implement a "virtualized scrolling," where the client system can load more data from the server as the user scrolls to the bottom of the page. In these cases, the user's view starts from a given page and then scrolls down to retrieve and display data lower on the page. While the example of Fig. 1 illustrates a desktop computer example, the techniques disclosed herein are applicable to any client system and in particular to any web-based client. For example, the processes disclosed herein can be used in any client that runs in a browser or as a native app on a multitude of devices, such as smartphones, desktops, tablets, specialized displays in other devices, etc., using a variety of user interfaces and inputs, such as touch screens, mice, touch pads, cameras that sense gestures, etc.

Disclosed embodiments provide a user interaction that creates an illusion of a seamless continuous scroll that can scroll upwards in the data as well as downwards, or in any "direction" within the data for which there is additional data to be retrieved and displayed to the user.

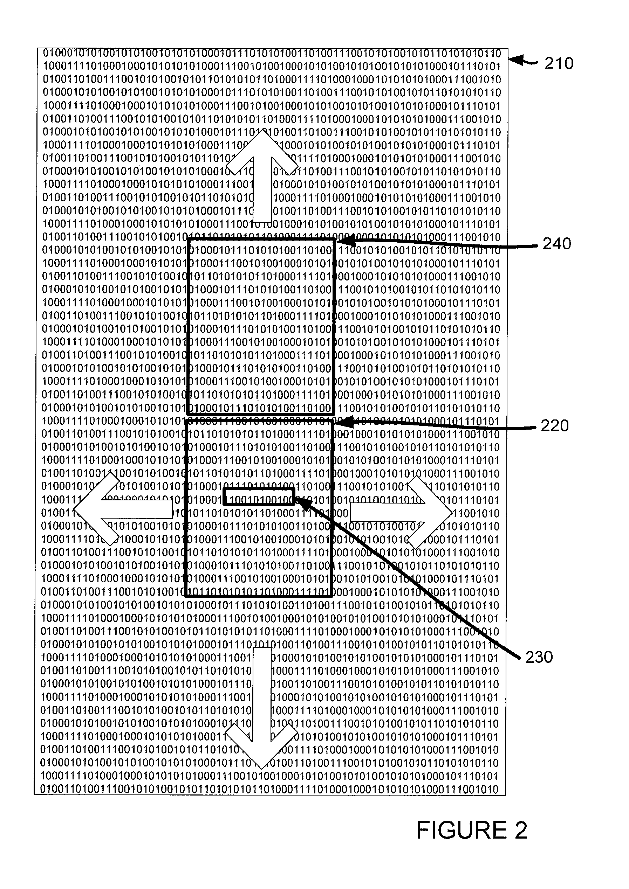

Figure 2 illustrates an example of a large data structure 210 that is maintained in a server system, for example in a storage 126 of the server system. Large data structure 210 can be any data structure or file, including but not limited to computer aided design ("CAD"), PDM, or PLM data, HTML or XML data, or otherwise. In this figure, block 220 represents the portion or subset of data that has been sent to the client system and which the user is currently viewing ("subset 220"). As illustrated by the large arrows, disclosed embodiments allow the user to navigate the large data structure 210 in any direction, and as he does, the client system 100 sends to sever system 140 a request for the corresponding data, which server system 140 returns to client system 100 for display to the user in a display window 150. Of course, in many cases, the large data structure 210 includes data that is only logically traversed in two directions - to logically previous data and to logically subsequent data.

The starting viewpoint of the user into the large data structure 210 or current view of the user into the large data structure 210 at any given time does not affect the user's ability to navigate or the processes as described herein. For example, the client system may initially request any subset 220 of the large data structure 210 based on an attribute search, proximity search, where used search, other search, or otherwise, and the specific subset 220 does not affect the seamless behavior described herein. In specific embodiments, subset 220 is based on a specific target data 230, such as a search result.

According to disclosed embodiments, other portions of the large data structure 210 are not loaded ahead of time; rather, the client system requests the data as needed which permits good performance regardless of the size of the data on the server. The user can scroll "up" - to data in the large data structure 210 that is logically located previous to subset 220 - as if he had in fact started from the top originally and move up or down, where other systems are only capable of downward scrolling to data in the large data structure 210 that is logically located subsequent to subset 220. Thus, only the subset 220 is retrieved in response to the initial search or access, for example a search for target data 230, without retrieving either logically previous or logically subsequent data until and unless the user navigates to that data. Subset 240 represents a logically-previous subset of data with respect to subset 220.

Disclosed embodiments can bring into view a particular subset 220, for example found via a search within that massive set of data for a target data 230, and present subset 220 in a form that is organized identically to how the large data structure 210 is organized on the server. Disclosed embodiments can then allow for navigation of that data, as it is organized, giving the impression that all of the data had been loaded to the client from the start.

In some systems, the window of data sent to the client is typically from the root of a hierarchy or the first element of a list through to the target data 230 and perhaps beyond by some buffer to form the window. In various embodiments, subset 220 includes just enough data surrounding the target data 230 to fill the client system display window. The amount of data corresponding to the client system display window is referred to herein as a "page," and the page size depending on the device used as the client system, the size of the display window in the client system, and if the display window of the client system is resized or reoriented by the user or otherwise. The navigation is then via a process of loading more data from the server as the user scrolls down in the large data structure 210, whether it be a list, tree table display, within a document representation, a directed graph, or other data structure.

For example, if a search resulted in loading the 999,999th page (or window into the data), some systems will load pages 1-999,999 at a minimum to display the 999,999th page. When the user pages up via scrolling or any other means of navigation, the data for those virtual pages of information are already on the client, which is hugely inefficient in terms of storage, processing, and bandwidth consumed. When the user scrolls down, the additional virtual pages of data are retrieved. This virtual paging of additional content from the server provides a near identical behavior, and thus user experience, to as if the data were all loaded on the client.

According to disclosed embodiments, only the 999,999th page is sent to the client. Additional subsequent data from the server for any additional virtual pages, e.g. page 1,000,000 and 1,000,001, is paged into the client to give the impression that the data were all on the client. However, virtual pages 1-999,998 are not loaded to the client, and only when the user requests via scrolling or some other user interaction to go to the prior virtual page of data is that data retrieved from the server and shown as if it were already available on the client. While the user interaction is identical as to the other systems, the client memory savings and performance gains of loading and displaying only the window or page of data that the user can see on a computer display at one time is significant. Disclosed techniques can even allow for navigating sets of data that are far larger than what the client device may be able to load into memory.

An additional benefit is that not only can the user navigate from the aforementioned 999,999^{th} page to the first page as if the entire set of data were all known to the client, but also it can unload the prior loaded pages, which are no longer displayed in the display window, to continue to benefit from the limited use of client resources. This is particularly important to run on devices and platforms such as a web browser where the available memory is limited, and on devices such as smartphones and tablets where the device memory may be even more limited. In addition to "scrolling" between pages, according to disclosed embodiments, the user can do a further search to move the window of data somewhere else later, prior, or any direction in the data structure without having to load all of the data in the data structure between the first window location and the second window location.

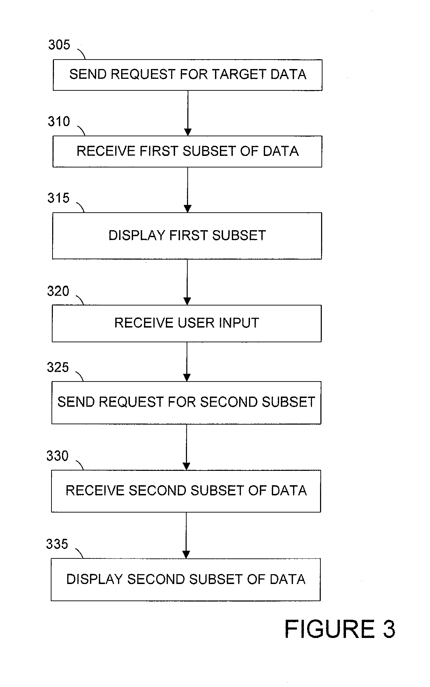

Figure 3 illustrates a flowchart of a process in accordance with disclosed embodiments that may be performed, for example, by a client data processing system as described herein.

The client system sends, to a server system, a request for a target data (305). The request can be a search or query for which the target data is the response. The target data is a data element in a large data structure as described herein. This step can include determining, by the client system, a subset size according to the size of a display window of the client system, and sending the subset size to the server system with or as a part of the request. The client can also specify the organization of the target data requested, e.g. that the list is sorted by a specific attribute to order the data or by a spatial organization.

The client system receives, in response to the request and from the server system, a first subset of the large data structure, the first subset including the target data (310). The first subset can be a portion of the large data structure that corresponds to the subset size.

The client system displays the first subset in the display window (315).

The client system receives a user input to display a second subset of the large data structure (320). The second subset is logically previous to the first subset in the large data structure. The user input can be a scroll-bar input, a drag input by mouse, touchscreen, or otherwise, or other input.

The client system sends, to the server system, a request for the second subset of the large data structure (325). This step can include sending the subset size to the server system with or as a part of the request.

The client system receives, in response to the request and from the server system, the second subset of the large data structure (330). The second subset can be a portion of the large data structure that corresponds to the subset size, and is logically previous to the first subset in the large data structure. As part of this step, the client system can delete the first subset from its memory to free memory space.

The client system displays the second subset in the display window (335).

In some embodiments, display window 150 can include a scroll bar that is sized relative to the actual size of the full set of data and to provide indications of when the client is retrieving data from the server when it reaches the top of the client's list and is retrieving more content from the server.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke 35 USC §112(f) unless the exact words "means for" are followed by a participle.

### FURTHER EMBODIMENTS

1. A method performed by a client data processing system (100), comprising:
   sending (305), to a server system (140), a request for a target data (230), wherein the target data is a data element in a large data structure (210);
   receiving (310), in response to the request and from the server system (140), a first subset (220) of the large data structure (210), the first subset (220) including the target data (230);
   displaying (315) the first subset (220) in a display window (150) of the client data processing system (100);
   receiving (320) a user input to display a second subset (240) of the large data structure (210), wherein the second subset (240) is logically previous to the first subset (220) in the large data structure (210);
   sending (325), to the server system (140), a request for the second subset (240) of the large data structure (210);
   receiving (330), from the server system (140), the second subset (240) of the large data structure (210); and
   displaying (335) the second subset (240) in the display window (150).
2. The method of embodiment 1, wherein the request for the target data (230) is a search or query for which the target data is the response.
3. The method of embodiment 1, wherein the client data processing system (100) also determines a subset size according to the size of the display window (150) and sends the subset size to the server system (140).
4. The method of embodiment 3, wherein the first subset (220) is a portion of the large data structure (210) that corresponds to the subset size.
5. The method of embodiment 1, wherein the user input is one of a scroll-bar input, a drag input by mouse, or a drag input by touchscreen.
6. The method of embodiment 1, wherein the client data processing system (100) also deletes the first subset from a memory (108) after receiving the second subset (240).
7. The method of embodiment 1, wherein the large data structure (210) is one of a computer-aided design data structure, product data management data structure, a product lifecycle management data structure, an HTML data structure, or an XML data structure.
8. A client data processing system (100) comprising:
   a processor (102);
   an accessible memory (108); and
   a display (111), the client data processing system (100) particularly configured to
      send (305), to a server system (140), a request for a target data (230), wherein the target data is a data element in a large data structure (210);
      receive (310), in response to the request and from the server system (140), a first subset (220) of the large data structure (210), the first subset (220) including the target data (230);
      display (315) the first subset (220) in a display window (150) of the client data processing system (100);
      receive (320) a user input to display a second subset (240) of the large data structure (210), wherein the second subset (240) is logically previous to the first subset (220) in the large data structure (210);
      send (325), to the server system (140), a request for the second subset (240) of the large data structure (210);
      receive (330), from the server system (140), the second subset (240) of the large data structure (210); and
      display (335) the second subset (240) in the display window (150).
9. The client data processing system (100) of embodiment 8, wherein the request for the target data (230) is a search or query for which the target data is the response.
10. The client data processing system (100) of embodiment 8, wherein the client data processing system (100) also determines a subset size according to the size of the display window (150) and sends the subset size to the server system (140).
11. The client data processing system (100) of embodiment 8, wherein the first subset (220) is a portion of the large data structure (210) that corresponds to the subset size.
12. The client data processing system (100) of embodiment 8, wherein the user input is one of a scroll-bar input, a drag input by mouse, or a drag input by touchscreen.
13. The client data processing system (100) of embodiment 8, wherein the client data processing system (100) also deletes the first subset from a memory (108) after receiving the second subset (240).
14. The client data processing system (100) of embodiment 8, wherein the large data structure (210) is one of a computer-aided design data structure, product data management data structure, a product lifecycle management data structure, an HTML data structure, or an XML data structure.
15. A non-transitory computer-readable medium (126) encoded with executable instructions that, when executed, cause a client data processing system (100) to:
   send (305), to a server system (140), a request for a target data (230), wherein the target data is a data element in a large data structure (210);
   receive (310), in response to the request and from the server system (140), a first subset (220) of the large data structure (210), the first subset (220) including the target data (230);
   display (315) the first subset (220) in a display window (150) of the client data processing system (100);
   receive (320) a user input to display a second subset (240) of the large data structure (210), wherein the second subset (240) is logically previous to the first subset (220) in the large data structure (210);
   send (325), to the server system (140), a request for the second subset (240) of the large data structure (210);
   receive (330), from the server system (140), the second subset (240) of the large data structure (210); and
   display (335) the second subset (240) in the display window (150).
16. The computer-readable medium of embodiment 15, wherein the request for the target data (230) is a search or query for which the target data is the response.
17. The computer-readable medium of embodiment 15, wherein the client data processing system (100) also determines a subset size according to the size of the display window (150) and sends the subset size to the server system (140).
18. The computer-readable medium of embodiment 17, wherein the first subset (220) is a portion of the large data structure (210) that corresponds to the subset size.
19. The computer-readable medium of embodiment 15, wherein the user input is one of a scroll-bar input, a drag input by mouse, or a drag input by touchscreen.
20. The computer-readable medium of embodiment 15, wherein the client data processing system (100) also deletes the first subset from a memory (108) after receiving the second subset (240).

## Claims

1. A method performed by a client data processing system (100), comprising:
sending (305), to a server system (140), a request for a target data (230), wherein the target data is a data element in a large data structure (210);
receiving (310), in response to the request and from the server system (140), a first subset (220) of the large data structure (210), the first subset (220) including the target data (230);
displaying (315) the first subset (220) in a display window (150) of the client data processing system (100);
receiving (320) a user input to display a second subset (240) of the large data structure (210), wherein the second subset (240) is logically previous to the first subset (220) in the large data structure (210);
sending (325), to the server system (140), a request for the second subset (240) of the large data structure (210);
receiving (330), from the server system (140), the second subset (240) of the large data structure (210); and
displaying (335) the second subset (240) in the display window (150).

2. The method of claim 1, wherein the request for the target data (230) is a search or query for which the target data is the response.

3. The method according to any of the preceding claims, wherein the client data processing system (100) also determines a subset size according to the size of the display window (150) and sends the subset size to the server system (140).

4. The method of claim 3, wherein the first subset (220) is a portion of the large data structure (210) that corresponds to the subset size.

5. The method according to any of the preceding claims, wherein the user input is one of a scroll-bar input, a drag input by mouse, or a drag input by touchscreen.

6. The method according to any of the preceding claims, wherein the client data processing system (100) also deletes the first subset from a memory (108) after receiving the second subset (240).

7. The method according to any of the preceding claims, wherein the large data structure (210) is one of a computer-aided design data structure, product data management data structure, a product lifecycle management data structure, an HTML data structure, or an XML data structure.

8. A client data processing system (100) comprising:
a processor (102);
an accessible memory (108); and
a display (111), the client data processing system (100) particularly configured to
send (305), to a server system (140), a request for a target data (230), wherein the target data is a data element in a large data structure (210);
receive (310), in response to the request and from the server system (140), a first subset (220) of the large data structure (210), the first subset (220) including the target data (230);
display (315) the first subset (220) in a display window (150) of the client data processing system (100);
receive (320) a user input to display a second subset (240) of the large data structure (210), wherein the second subset (240) is logically previous to the first subset (220) in the large data structure (210);
send (325), to the server system (140), a request for the second subset (240) of the large data structure (210);
receive (330), from the server system (140), the second subset (240) of the large data structure (210); and
display (335) the second subset (240) in the display window (150).

9. The client data processing system of claim 8, wherein the request for the target data (230) is a search or query for which the target data is the response.

10. The client data processing system according to any of the preceding system claims, wherein the client data processing system (100) also determines a subset size according to the size of the display window (150) and sends the subset size to the server system (140).

11. The client data processing system of claim 10, wherein the first subset (220) is a portion of the large data structure (210) that corresponds to the subset size.

12. The client data processing system according to any of the preceding system claims, wherein the user input is one of a scroll-bar input, a drag input by mouse, or a drag input by touchscreen.

13. The client data processing system according to any of the preceding system claims, wherein the client data processing system (100) also deletes the first subset from a memory (108) after receiving the second subset (240).

14. The client data processing system according to any of the preceding system claims, wherein the large data structure (210) is one of a computer-aided design data structure, product data management data structure, a product lifecycle management data structure, an HTML data structure, or an XML data structure.

15. A non-transitory computer-readable medium (126) encoded with executable instructions that, when executed, cause a client data processing system (100) to execute a method according to any of the claims 1 to 7.
